# EUROPEAN PATENT SPECIFICATION

(11) **EP 4 310 622 B1**
(45) Date of publication and mention of the grant of the patent: **02.09.2026**
(21) Application number: 22216812.2
(22) Date of filing: 27.12.2022
(51) Int. Cl.: G05D 1/243, G05D 1/686

(54) **FOLLOWING CONTROL METHOD AND APPARATUS FOR ROBOT AND STORAGE MEDIUM**
FOLGESTEUERUNGSVERFAHREN UND -VORRICHTUNG FÜR ROBOTER UND SPEICHERMEDIUM
PROCÉDÉ ET APPAREIL DE COMMANDE DE SUIVI POUR ROBOT ET SUPPORT D'INFORMATIONS

(30) Priority: 18.07.2022 CN 202210845997
(43) Date of publication of application: 24.01.2024
(73) Proprietor: Beijing Xiaomi Robot Technology Co., Ltd., Beijing 100176 (CN)
(72) Inventor: LI, Dongfang, Beijing, 100085 (CN)
(74) Representative: Stöckeler, Ferdinand

(56) References cited:
- US-A1- 2016 188 977
- US-A1- 2019 096 069
- US-B1- 11 372 408

## Description

### FIELD

The present invention relates to the field of robot technologies, and particularly to a following control method and apparatus for a robot and a storage medium.

### BACKGROUND

Robots are increasingly used to perform a variety of tasks in daily work and life. Some robots are designed as following robots, where the motion of the robot is based on following another object. These types of robots are widely applied to the fields of logistics, motion accompaniment, photographing, shooting, recording and other fields.

US 2016/188977 A1 discloses a method of operating a mobile robot, which includes receiving a layout map corresponding to a patrolling environment at a computing device and maneuvering the robot in the patrolling environment based on the received layout map. The method further includes receiving imaging data of a scene about the robot when the robot maneuvers in the patrolling environment at the computing device. The imaging data is received from one or more imaging sensors disposed on the robot and in communication with the computing device. The method further includes identifying a person in the scene based on the received imaging data and aiming a field of view of at least one imaging sensor to continuously perceive the identified person in the field of view. The method further includes capturing a human recognizable image of the identified person using the at least one imaging sensor.

US 2019/096069 A1 discloses a method for controlling a movable object to track a target object, which includes determining a change in one or more features between a first image frame and a second image frame, and adjusting a movement of the movable object based on the change in the one or more features between the first image frame and the second image frame. The one or more features are associated with the target object, and the first image frame and the second image frame are captured at different points in time using an imaging device on the movable object.

US 11 372 408 B1 discloses a robot having a component that is oriented relative to a chassis of the robot. For example, a display screen is mounted to the robot using a pan and tilt arrangement. During operation, trajectory data indicative of a trajectory is determined that specifies where the robot is intended to travel as it moves through an environment. This trajectory data is used to dynamically orient the component. For example, as the robot moves through the environment, the display screen would be oriented such that it appears to be "facing" a point in space that is associated with a point on the trajectory.

### SUMMARY

The present invention provides a following control method and apparatus for a robot and the robot, to at least solve a problem that if a target object deviates from an original route quickly, since the target object disappears in a visual field, a pose of the target object cannot be continuously and effectively detected, resulting in failure of a following task. The technical solution of the present invention is as follows.

The invention is set out in the appended set of claims.

The technical solution of embodiments of the present invention at least has the following beneficial effects.

In the present application, under the condition that the visual field of the robot is limited, the visual field range of the robot is adjusted in real time according to the relative pose relationship between the target object and the robot, to prevent the target object from disappearing in the visual field range, thereby achieving the effect that the robot smoothly follows the target object.

It is to be understood that both the foregoing general description and the following detailed description are exemplary and explanatory only and are not intended to limit the present invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention, and do not constitute an improper limitation of the present invention.
FIG. 1 is a flowchart of a following control method for a robot according to an embodiment.
FIG. 2 is a schematic diagram showing motion control of a robot according to a motion track of a target object in an embodiment.
FIG. 3 is a schematic diagram showing adjustment of a visual field range of a robot according to a motion track of a target object in an embodiment.
FIG. 4 is a schematic diagram in which a robot follows a target object from left rear in an embodiment.
FIG. 5 is a schematic diagram in which a robot follows a target object from right rear in an embodiment.
FIG. 6 is a flowchart of a following control method for a robot according to an embodiment.
FIG. 7 is an overall flow chart of a following control method for a robot according to an embodiment.
FIG. 8 is a schematic diagram of a following control apparatus for a robot according to an embodiment.
FIG. 9 is a block diagram of an electronic device for controlling a robot according to an embodiment.

### DETAILED DESCRIPTION

In order to make those skilled in the art better understand the technical solutions of the present invention, the technical solutions in embodiments of the present invention will be clearly and completely described below with reference to the accompanying drawings.

In a process of tracking a target object by the robot, due to a mounting position of a sensor and a limitation of an effective visual field, if the target object deviates from an original route quickly, the target object disappears in the visual field of the robot, and the robot cannot continuously and effectively detect a pose of the target object, resulting in failure of a following task.

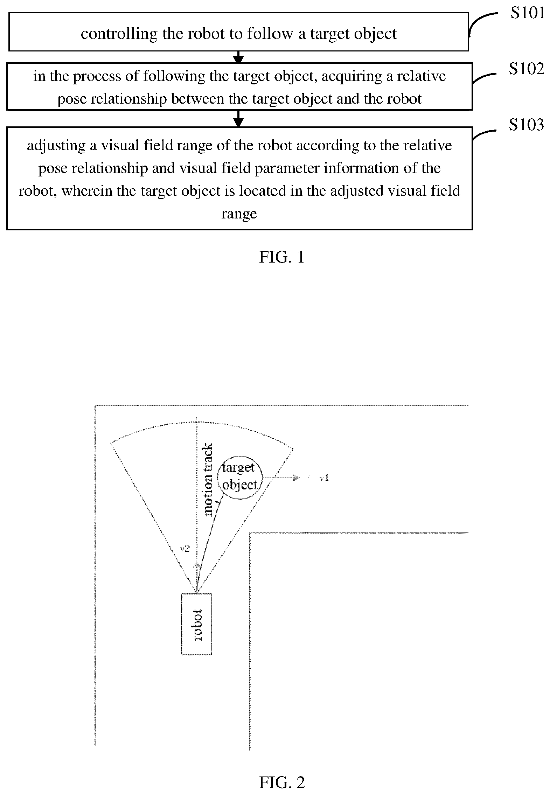

FIG. 1 is an implementation of a following control method for a robot according to the present invention, and as illustrated in FIG. 1, the following control method for a robot includes the following steps:
At block S101: the robot is controlled to follow a target object.

In a mobile robot application, 3 coordinate values are required in a plane to determine a unique state: two of the coordinates (X, Y) are used to determine a robot position and the other one is used to determine a robot orientation. Omnidirectional motion refers to a capability of the robot to move from a current position in any direction on a two-dimensional plane, and the robot with an omnidirectional motion capability can achieve a perfect motion performance, that is, can move along a path in any direction at the current position.

The robot according to the present invention has an omnidirectional motion capability; for example, the robot according to the present invention may include a quadruped robot having an omnidirectional motion capability, an unmanned aerial vehicle having an omnidirectional motion capability, or the like, and when the robot performs a following task, the robot is required to be controlled to follow a target object. The present invention can be suitable for a robot with a target following requirement, such as a service robot, a transfer robot, a motion accompanying robot, a photographing, shooting and recording robot, or the like.

For example, in a process of controlling the robot to follow the target object, motion control of the robot is mostly planned according to a motion track of the target object, and a right ahead direction of the robot is always along a tangential direction of the motion track of the target object in the motion process. FIG. 2 is a schematic diagram showing motion control of a robot according to a motion track of a target object in an embodiment, and as illustrated in FIG. 2, a circle represents the target object, a rectangle represents the robot, a curve is the motion track (illustrated in the drawing) of the target object, the target object turns to the right at a speed v1, the robot runs along a tangential direction of the motion track of the target object at a speed v2 to follow the target object, a sector represents a visual field range of an image capturing apparatus of the robot, a dotted line in the middle of the sector represents a visual field center line of the robot, and at this point, the target object is located in the visual field range of the robot. In some examples, the image capturing apparatus of the robot may include a camera, a depth camera, or the like, mounted on the robot.

At block S102: in the process of following the target object, a relative pose relationship between the target object and the robot is acquired.

In the process of following the target object, a real-time pose of the target object is acquired as a first pose, a real-time pose of the robot is acquired as a second pose, and the relative pose relationship between the target object and the robot is acquired based on the first pose of the target object and the second pose of the robot. The pose describes a position and a posture of the target object or the robot in a specified coordinate system, the position refers to a location of the target object or the robot in a space, and the posture refers to an orientation of the target object or the robot in the space.

For example, when the first pose of the robot is acquired, the first pose of the target object may be acquired by performing recognition and processing according to a real-time image of the target object captured by the robot, and when the second pose of the robot is acquired, the position of the robot may be acquired using a global navigation satellite system (GNSS), or active positioning may be performed based on communication technologies such as Wifi^{®}, Bluetooth^{®}, ultra wide band (UWB), or the like, to acquire the second pose of the robot.

At block S103: a visual field range of the robot is adjusted according to the relative pose relationship and visual field parameter information of the robot, in which the target object is located in the adjusted visual field range.

In the process that the robot follows the target object, if the target object suddenly and rapidly moves, the target object may disappear in the visual field range of the robot, and in order to prevent the target object from disappearing in the visual field range of the robot, the visual field range of the robot is required to be adjusted in real time according to the relative pose relationship between the target object and the robot and the visual field parameter information of the robot, such that the target object is always located in the adjusted visual field range. The visual field parameter information includes information, such as a visual field angle, a visual field center line, or the like, of the robot.

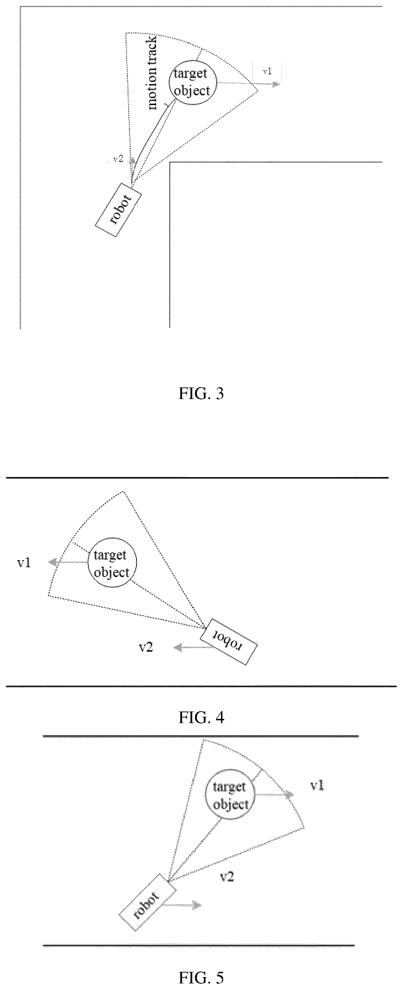

FIG. 3 is a schematic diagram of adjustment of the visual field range of the robot according to the motion track of the target object, and as illustrated in FIG. 3, in a process that the target object rapidly moves to the right at a corner, if the visual field range of the robot is still an original visual field range, the target object may disappear in the visual field range of the robot, and in FIG. 3, in the process that the robot moves along the tangential direction of the motion track of the target object, the robot is controlled to rotate to the right by a certain angle, such that the target object is also in the adjusted visual field range in the process of rapidly movement to the right. It should be noted that, since the robot according to the present invention has an omnidirectional motion capability, although the orientation of the robot is changed, the traveling direction of the robot is still along the tangential direction of the motion track of the target object. In some examples, when the robot is controlled to rotate to the right, the whole robot or only the image capturing apparatus of the robot is controlled to rotate to the right.

Embodiments of the present invention provide a following control method for a robot, the robot is controlled to follow the target object; in the process of following the target object, the relative pose relationship between the target object and the robot is acquired; and the visual field range of the robot is adjusted according to the relative pose relationship and visual field parameter information of the robot, in which the target object is located in the adjusted visual field range. In the present invention, under a condition that the visual field of the robot is limited, the visual field range of the robot is adjusted in real time according to the relative pose relationship between the target object and the robot, to prevent the target object from disappearing in the visual field range, thereby achieving an effect that the robot smoothly follows the target object.

Further, when the robot is controlled to follow the target object, in order to more accurately acquire the motion track of the target object, the real-time image of the target object can be acquired based on the image capturing apparatus mounted on the robot, and the motion track of the target object can be acquired according to the real-time image, such that the robot is controlled to follow the target object according to the motion track. In some examples, when the motion track of the target object is acquired according to the real-time image, a method of fitting according to historical track points, or the like, may be adopted.

As an implementation, in a rear following scenario, a preset relative distance between the target object and the robot is acquired, a first real-time speed of the target object is acquired in real time, a second real-time speed of the robot is acquired according to the first real-time speed and the preset relative distance, and after the second real-time speed of the robot is acquired, the robot is controlled to follow the target object at the second real-time speed along the tangential direction of the motion track, to avoid a situation that the robot cannot follow the target object due to a sudden increase of the speed of the target object, or a situation that the robot and the target object collide due to a sudden decrease of the speed of the target object. In the process of following the target object, the relative pose relationship between the target object and the robot is acquired, and the visual field range of the robot is adjusted according to the relative pose relationship between the target object and the robot and the visual field parameter information of the robot; the target object is located in the adjusted visual field range, such that the target object does not disappear in the visual field range of the robot in the rear following scenario.

For example, if initial moving speeds of the target object and the robot are both 5km/h, the preset relative distance between the target object and the robot is 100cm, if at a certain moment, the first real-time speed of the target object is suddenly increased to 8km/h, in order to avoid the situation that the robot cannot follow the target object, the second real-time speed of the robot is acquired according to the first real-time speed of 8km/h of the target object and the preset relative distance of 100cm between the target object and the robot, and after the second real-time speed of the robot is acquired, the robot is controlled to follow the target object at the second real-time speed along the tangential direction of the motion track.

As another implementation, in a side following scenario, the robot is not required to run along the tangential direction of the track of the target object, and is required to run by keeping the preset relative pose relationship with the target object, the preset relative pose relationship between the target object and the robot is acquired, the robot is controlled to follow the target object according to the preset relative pose relationship, and in the following process, a first real-time motion direction of the robot and a second real-time motion direction of the target object are kept the same. In the process of following the target object, the relative pose relationship between the target object and the robot is acquired, and the visual field range of the robot is adjusted according to the relative pose relationship between the target object and the robot and the visual field parameter information of the robot; the target object is located in the adjusted visual field range, such that the target object does not disappear in the visual field range of the robot in the side following scenario.

FIG. 4 is a schematic diagram in which the robot follows the target object from left rear in the present invention, and as illustrated in FIG. 4, the direction of the robot is rotated by a certain angle, such that the target object is always located in the visual field range of the robot, the target object horizontally advances to the left at a speed v1, and the robot horizontally advances to the left at a speed v2. The speed v1 of the target object and the speed v2 of the robot may be the same or different.

FIG. 5 is a schematic diagram in which the robot follows the target object from right rear in the present invention, and as illustrated in FIG. 5, the direction of the robot is rotated by a certain angle, such that the target object is always located in the visual field range of the robot, the target object horizontally advances to the right at a speed v1, and the robot horizontally advances to the right at a speed v2. The speed v1 of the target object and the speed v2 of the robot may be the same or different.

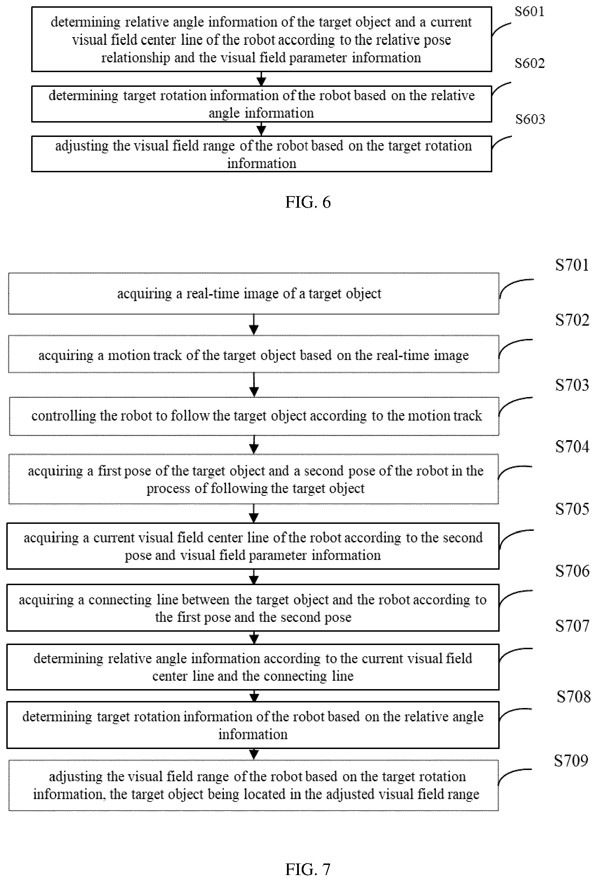

FIG. 6 is an implementation of the following control method for a robot according to the present invention, and as illustrated in FIG. 6, based on the foregoing embodiment, adjusting a visual field range of the robot according to the relative pose relationship and visual field parameter information of the robot includes the following steps:
At block S601: relative angle information of the target object and a current visual field center line of the robot are determined according to the relative pose relationship and the visual field parameter information.

In the process of following the target object, the real-time pose of the target object is acquired as the first pose, the real-time pose of the robot is acquired as the second pose, and the relative pose relationship between the target object and the robot is acquired according to the first pose of the target object and the second pose of the robot.

The current visual field center line of the robot is acquired according to the second pose and the visual field parameter information of the robot, a connecting line between the target object and the robot is acquired according to the first pose of the target object and the second pose of the robot, a magnitude and a direction of an angle formed by the current visual field center line and the connecting line are acquired, and the magnitude and the direction of the angle are taken as the relative angle information. For example, if the connecting line between the target object and the robot is located on the right side of the current visual field center line of the robot, and the angle formed by the current visual field center line and the connecting line is 30°, the relative angle information of the target object relative to the current visual field center line of the robot is a right angle of 30°. It should be noted that, in order to conveniently acquire the relative angle information between the target object and the current visual field center line of the robot, one end of the connecting line between the target object and the robot is located at the target object, and the other end is located at an emission vertex of the current visual field center line of the robot, which can also be regarded as the position of the image capturing apparatus.

At block S602: target rotation information of the robot is determined based on the relative angle information.

The target rotation information of the robot is determined according to the determined relative angle information of the target object relative to the current visual field center line of the robot.

As an implementation, the relative angle information may be directly used as the target rotation information of the robot; for example, if the determined relative angle information of the target object relative to the current visual field center line of the robot is an angle of 30° on the right side, the target rotation information of the robot is rightward rotation by 30°.

As another implementation, a preset angle threshold may be preset, and if the relative angle information is greater than the preset angle threshold, it is considered that the target object is at risk of disappearing from the visual field range at this point, and the relative angle information is determined as the target rotation information of the robot. For example, if the visual field range of the robot is 120°, the visual field range of the robot may be regarded as a range of 60° on the left side and a range of 60° on the right side of the current visual field center line, and if the preset angle threshold is set to 40°, which means that when the relative angle information is greater than 40°, it is considered that the target object is at risk of disappearing from the visual field range at this point, the relative angle information is determined as the target rotation information of the robot. For example, when the relative angle information is 45° on the right side, rightward rotation by 45° is used as the target rotation information of the robot. The target rotation information of the robot is determined to be preset rotation information if the relative angle information is less than or equal to the preset angle threshold. The preset rotation information may be 0; that is, when the relative angle information is less than or equal to the preset angle threshold, it is considered that the target object is not at risk of disappearing from the visual field range at this point, and the visual field range of the robot is not adjusted.

At block S603: the visual field range of the robot is adjusted based on the target rotation information.

The visual field range of the robot is adjusted according to the determined target rotation information.

For example, if the determined target rotation information is rightward rotation by 30°, the robot is controlled to rightwards rotate by 30°, to adjust the visual field range of the robot.

In embodiments of the present invention, under the condition that the visual field of the robot is limited, the visual field range of the robot is adjusted in real time according to the relative pose relationship between the target object and the robot, to prevent the target object from disappearing in the visual field range, thereby achieving the effect that the robot smoothly follows the target object.

FIG. 7 is an overall flow chart of a following control method for a robot according to the present invention, and as illustrated in FIG. 7, the following control method for a robot includes the following steps:
At block S701: a real-time image of a target object is acquired.
At block S702: a motion track of the target object is acquired based on the real-time image.
At block S703: the robot is controlled to follow the target object according to the motion track.

For implementations of steps S701 to S703, reference may be made to the description of relevant parts in the above embodiments, and details are not repeated herein.

At block S704: a first pose of the target object and a second pose of the robot are acquired in the process of following the target object.

At block S705: a current visual field center line of the robot is acquired according to the second pose and visual field parameter information.

At block S706: a connecting line between the target object and the robot is acquired according to the first pose and the second pose.

At block S707: relative angle information is determined according to the current visual field center line and the connecting line.

For implementations of steps S704 to S707, reference may be made to the description of relevant parts in the above embodiments, and details are not repeated herein.

At block S708: target rotation information of the robot is determined based on the relative angle information.

At block S709: the visual field range of the robot is adjusted based on the target rotation information, the target object being located in the adjusted visual field range.

For implementations of steps S708 to S709, reference may be made to the description of relevant parts in the above embodiments, and details are not repeated herein.

Embodiments of the present invention provide the following control method for a robot, the robot is controlled to follow the target object; in the process of following the target object, the relative pose relationship between the target object and the robot is acquired; and the visual field range of the robot is adjusted according to the relative pose relationship and visual field parameter information of the robot, in which the target object is located in the adjusted visual field range. In the present invention, under the condition that the visual field of the robot is limited, the visual field range of the robot is adjusted in real time according to the relative pose relationship between the target object and the robot, to prevent the target object from disappearing in the visual field range, thereby achieving the effect that the robot smoothly follows the target object.

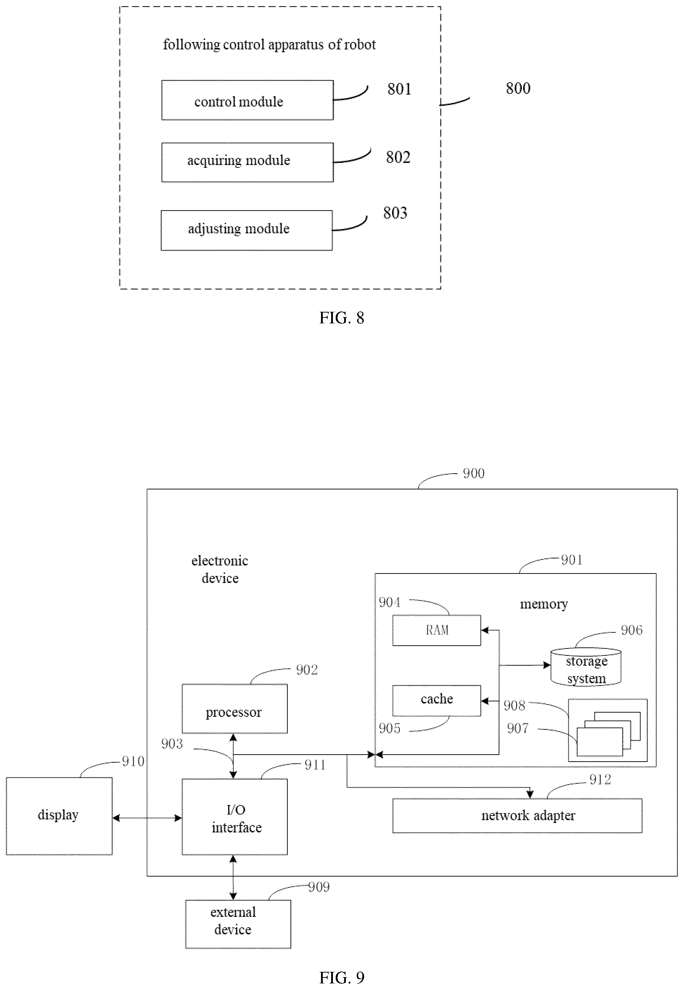

FIG. 8 is a schematic diagram of a following control apparatus for a robot according to the present invention, and as illustrated in FIG. 8, the following control apparatus 800 for a robot includes a control module 801, an acquiring module 802, and an adjusting module 803.

The control module 801 is configured to control the robot to follow a target object.

The acquiring module 802 is configured to, in the process of following the target object, acquire a relative pose relationship between the target object and the robot.

The adjusting module 803 is configured to adjust a visual field range of the robot according to the relative pose relationship and visual field parameter information of the robot, in which the target object is located in the adjusted visual field range.

Embodiments of the present invention provide the following control apparatus for a robot, the robot being controlled to follow the target object; in the process of following the target object, the relative pose relationship between the target object and the robot is acquired; and the visual field range of the robot is adjusted according to the relative pose relationship and visual field parameter information of the robot, in which the target object is located in the adjusted visual field range. In the present invention, under the condition that the visual field of the robot is limited, the visual field range of the robot is adjusted in real time according to the relative pose relationship between the target object and the robot, to prevent the target object from disappearing in the visual field range, thereby achieving the effect that the robot smoothly follows the target object.

Further, the adjusting module 803 is further configured to: determine relative angle information of the target object and a current visual field center line of the robot according to the relative pose relationship and the visual field parameter information; determine target rotation information of the robot based on the relative angle information; and adjust the visual field range of the robot based on the target rotation information.

Further, the adjusting module 803 is further configured to: acquire the current visual field center line of the robot according to a second pose and the visual field parameter information; acquire a connecting line between the target object and the robot according to a first pose and the second pose; and determine the relative angle information according to the current visual field center line and the connecting line.

Further, the adjusting module 803 is further configured to: determine the relative angle information as the target rotation information of the robot in response to the relative angle information being greater than a preset angle threshold. The target rotation information of the robot is determined to be preset rotation information in response to the relative angle information being less than or equal to the preset angle threshold.

Further, the control module 801 is further configured to: acquire a real-time image of the target object; acquire a motion track of the target object based on the real-time image; and control the robot to follow the target object according to the motion track.

Further, the control module 801 is further configured to: acquire a preset relative distance between the target object and the robot in a rear following scenario; acquire a first real-time speed of the target object, and acquire a second real-time speed of the robot according to the first real-time speed and the preset relative distance; and control the robot to follow the target object along a tangential direction of the motion track at the second real-time speed.

Further, the control module 801 is further configured to: acquire a preset relative pose relationship between the target object and the robot in a side following scenario; and control the robot to follow the target object according to the preset relative pose relationship, a first real-time motion direction of the robot and a second real-time motion direction of the target object being kept the same.

FIG. 9 is a block diagram of an electronic device 900 according to an embodiment.

As illustrated in FIG. 9, the electronic device 900 includes:
a memory 901, a processor 902, and a bus 903 connecting different components (including the memory 901 and the processor 902). The memory 901 stores a computer program, and the processor 902 executes the program to implement the following control method for a robot according to embodiments of the present invention.

The bus 903 represents one or more of several types of bus structures, including a memory bus or memory controller, a peripheral bus, an accelerated graphics port, a processor or a local bus using any of a variety of bus structures. By way of example, such architectures include, but are not limited to, an industry standard architecture (ISA) bus, a micro channel architecture (MAC) bus, an enhanced ISA bus, a video electronics standards association (VESA) local bus, and a peripheral component interconnection (PCI) bus.

The electronic device 900 typically includes a variety of electronic device readable medium. Such medium may be any available medium which is accessible by the electronic device 900, and include both volatile and non-volatile medium, and removable and non-removable medium.

The memory 901 may further include a computer system readable medium in the form of a volatile memory, such as a random access memory (RAM) 904 and/or a cache memory 905. The electronic device 900 may further include other removable/non-removable, volatile/non-volatile computer system storage medium. By way of example only, a storage system 906 may be provided for reading from and writing to a non-removable, non-volatile magnetic medium (not illustrated in FIG. 9 and typically called a "hard drive"). Although not illustrated in FIG. 9, a magnetic disk drive for reading from and writing to a removable, non-volatile magnetic disk (e.g., a "floppy disk"), and an optical disk drive for reading from or writing to a removable, non-volatile optical disk (such as a CD-ROM, a DVD-ROM or other optical medium) may be provided. In such instances, each drive may be connected with the bus 903 through one or more data medium interfaces. The memory 901 may include at least one program product having a set (e.g., at least one) of program modules which are configured to carry out the functions of embodiments of the present invention.

A program/utility 908 having a set (at least one) of program modules 907 may be stored in the memory 901 by way of example, and such program modules 907 include, but are not limited to, an operating system, one or more application programs, other program modules, and program data. Each of these examples or a certain combination thereof might include an implementation of a networking environment. The program modules 907 generally carry out the functions and/or methodologies of embodiments of the present invention.

The electronic device 900 may also communicate with one or more external devices 909 (such as a keyboard, a pointing device, a display 910, etc.); with one or more devices which enable a user to interact with the electronic device 900; and/or with any device (e.g., a network card, a modem, etc.) which enables the electronic device 900 to communicate with one or more other computing devices. Such communication may occur via input/output (I/O) interfaces 911. In addition, the electronic device 900 may further communicate with one or more networks (such as a local area network (LAN), a wide area network (WAN), and/or a public network (e.g., the Internet)) via a network adapter 912. As illustrated in FIG. 9, the network adapter 912 communicates with other modules of the electronic device 900 via the bus 903. It should be understood that although not illustrated in FIG. 9, other hardware and/or software modules may be used in conjunction with the electronic device 900, and include, but are not limited to: microcodes, device drives, redundant processing units, external disk drive arrays, RAID systems, tape drives, data backup storage systems, etc.

The processor 902 executes various function applications and data processing by running programs stored in the memory 901.

It should be noted that, for the implementation process and the technical principle of the electronic device according to the embodiment, reference is made to the foregoing explanation of the following control method for a robot according to embodiments of the present invention, and details are not repeated herein.

In order to realize the above embodiments, embodiments of the present invention further provide a non-transitory computer-readable storage medium having computer instructions stored thereon, in which the computer instructions are used to cause a computer to implement the following control method for a robot according to the above embodiments. In some examples, the non-transitory computer-readable storage medium may be a ROM, a random access memory (RAM), a CD-ROM, magnetic tape, a floppy disk, an optical data storage device, or the like.

In order to realize the above embodiments, embodiments of the present invention further provide a computer program product, which includes a computer program, the computer program, when executed by a processor, implementing the following control method for a robot according to the above embodiments.

In order to realize the above embodiments, embodiments of the present invention further provide a robot, including the following control apparatus for a robot according to the above embodiments or the electronic device according to the above embodiments.

## Claims

1. A following control method for a robot, comprising:
controlling (S101) the robot to follow a target object;
in a process of following the target object, acquiring (S102) a relative pose relationship between the target object and the robot; and
adjusting (S103) a visual field range of the robot according to the relative pose relationship and visual field parameter information of the robot, wherein the target object is located in the adjusted visual field range,
wherein adjusting (S103) a visual field range of the robot according to the relative pose relationship and visual field parameter information of the robot comprises:
determining (S601) relative angle information of the target object and a current visual field center line of the robot according to the relative pose relationship and the visual field parameter information;
determining (S602) target rotation information of the robot based on the relative angle information; and
adjusting (S603) the visual field range of the robot based on the target rotation information,
wherein the relative pose relationship comprises a first pose of the target object and a second pose of the robot, and determining (S601) relative angle information of the target object and a current visual field center line of the robot according to the relative pose relationship and the visual field parameter information comprises:
acquiring (S705) the current visual field center line of the robot according to the second pose and the visual field parameter information;
acquiring (S706) a connecting line between the target object and the robot according to the first pose and the second pose; and
determining (S707) the relative angle information according to the current visual field center line and the connecting line, wherein a magnitude and a direction of an angle formed by the current visual field center line and the connecting line are acquired, and the magnitude and the direction of the angle are taken as the relative angle information,
wherein a pose describes a position and a posture of the target object or the robot in a specified coordinate system, the position refers to a location of the target object or the robot in a space, and the posture refers to an orientation of the target object or the robot in the space.

2. The method according to claim 1, wherein determining (S602) target rotation information of the robot based on the relative angle information comprises:
determining the relative angle information as the target rotation information of the robot in response to the relative angle information being greater than a preset angle threshold; and
determining that the target rotation information of the robot is preset rotation information, in response to the relative angle information being less than or equal to the preset angle threshold.

3. The method according to claim 1 or 2, wherein controlling (S101) the robot to follow a target object comprises:
acquiring (S701) a real-time image of the target object;
acquiring (S702) a motion track of the target object based on the real-time image; and
controlling (S703) the robot to follow the target object according to the motion track.

4. The method according to claim 3, wherein controlling (S703) the robot to follow the target object according to the motion track comprises:
acquiring a preset relative distance between the target object and the robot in a scenario of following the target object from behind;
acquiring a first real-time speed of the target object, and acquiring a second real-time speed of the robot according to the first real-time speed and the preset relative distance; and
controlling the robot to follow the target object along a tangential direction of the motion track at the second real-time speed.

5. The method according to claim 1 or 2, wherein controlling (S101) the robot to follow a target object comprises:
acquiring a preset relative pose relationship between the target object and the robot in a scenario of following the target object from the side; and
controlling the robot to follow the target object according to the preset relative pose relationship, a first real-time motion direction of the robot and a second real-time motion direction of the target object being kept the same.

6. A following control apparatus for a robot, the following control apparatus comprising:
a control module (801) configured to control the robot to follow a target object;
an acquiring module (802) configured to, in a process of following the target object, acquire a relative pose relationship between the target object and the robot; and
an adjusting module (803) configured to adjust a visual field range of the robot according to the relative pose relationship and visual field parameter information of the robot, wherein the target object is located in the adjusted visual field range,
wherein the adjusting module (803) is further configured to:
determine relative angle information of the target object and a current visual field center line of the robot according to the relative pose relationship and the visual field parameter information;
determine target rotation information of the robot based on the relative angle information; and
adjust the visual field range of the robot based on the target rotation information,
wherein the relative pose relationship comprises a first pose of the target object and a second pose of the robot, and the adjusting module (803) is further configured to:
acquire the current visual field center line of the robot according to the second pose and the visual field parameter information;
acquire a connecting line between the target object and the robot according to the first pose and the second pose; and
determine the relative angle information according to the current visual field center line and the connecting line, wherein a magnitude and a direction of an angle formed by the current visual field center line and the connecting line are acquired, and the magnitude and the direction of the angle are taken as the relative angle information,
wherein a pose describes a position and a posture of the target object or the robot in a specified coordinate system, the position refers to a location of the target object or the robot in a space, and the posture refers to an orientation of the target object or the robot in the space.

7. The apparatus according to claim 6, wherein the adjusting module (803) is further configured to:
determine the relative angle information as the target rotation information of the robot in response to the relative angle information being greater than a preset angle threshold; and
determine that the target rotation information of the robot is preset rotation information, in response to the relative angle information being less than or equal to the preset angle threshold.

8. The apparatus according to claim 6 or 7, wherein the control module (801) is further configured to:
acquire a real-time image of the target object;
acquire a motion track of the target object based on the real-time image; and
control the robot to follow the target object according to the motion track.

9. The apparatus according to claim 8, wherein the control module (801) is further configured to:
acquire a preset relative distance between the target object and the robot in a scenario of following the target object from behind;
acquire a first real-time speed of the target object, and acquire a second real-time speed of the robot according to the first real-time speed and the preset relative distance; and
control the robot to follow the target object along a tangential direction of the motion track at the second real-time speed.

10. The apparatus according to claim 6 or 7, wherein the control module (801) is further configured to:
acquire a preset relative pose relationship between the target object and the robot in a scenario of following the target object from the side; and
control the robot to follow the target object according to the preset relative pose relationship, a first real-time motion direction of the robot and a second real-time motion direction of the target object being kept the same.

11. A non-transitory computer-readable storage medium having computer instructions stored thereon, wherein the computer instructions are configured to cause a computer to perform a following control method for a robot according to any one of claims 1 to 5.

## Patentansprüche

1. Ein Folgesteuerverfahren für einen Roboter, das folgende Schritte aufweist:
Steuern (S101) des Roboters, so dass derselbe einem Zielobjekt folgt;
bei einem Prozess des Folgens des Zielobjekts, Erfassen (S102) einer relativen Stellungsbeziehung zwischen dem Zielobjekt und dem Roboter; und
Einstellen (S103) eines Sichtfeldbereichs des Roboters gemäß der relativen Stellungsbeziehung und Sichtfeldparameterinformationen des Roboters, wobei sich das Zielobjekt in dem eingestellten Sichtfeldbereich befindet,
wobei das Einstellen (S103) eines Sichtfeldbereichs des Roboters gemäß der relativen Stellungsbeziehung und den Sichtfeldparameterinformationen des Roboters folgende Schritte aufweist:
Bestimmen (S601) von relativen Winkelinformationen des Zielobjekts und einer aktuellen Sichtfeldmittellinie des Roboters gemäß der relativen Stellungsbeziehung und den Sichtfeldparameterinformationen;
Bestimmen (S602) von Zielrotationsinformationen des Roboters basierend auf den relativen Winkelinformationen; und
Einstellen (S603) des Sichtfeldbereichs des Roboters basierend auf den Zielrotationsinformationen,
wobei die relative Stellungsbeziehung eine erste Stellung des Zielobjekts und eine zweite Stellung des Roboters aufweist, und das Bestimmen (S601) von relativen Winkelinformationen des Zielobjekts und einer aktuellen Sichtfeldmittellinie des Roboters gemäß der relativen Stellungsbeziehung und den Sichtfeldparameterinformationen folgende Schritte aufweist:
Erfassen (S705) der aktuellen Sichtfeldmittellinie des Roboters gemäß der zweiten Stellung und den Sichtfeldparameterinformationen;
Erfassen (S706) einer Verbindungslinie zwischen dem Zielobjekt und dem Roboter gemäß der ersten Stellung und der zweiten Stellung; und
Bestimmen (S707) der relativen Winkelinformationen gemäß der aktuellen Sichtfeldmittellinie und der Verbindungslinie, wobei eine Größe und eine Richtung eines Winkels, der durch die aktuelle Sichtfeldmittellinie und die Verbindungslinie gebildet wird, erfasst werden, und die Größe und die Richtung des Winkels als die relativen Winkelinformationen genommen werden,
wobei eine Stellung eine Position und eine Lage des Zielobjekts oder des Roboters in einem spezifizierten Koordinatensystem beschreibt, die Position sich auf eine Stelle des Zielobjekts oder des Roboters in einem Raum bezieht, und die Lage sich auf eine Ausrichtung des Zielobjekts oder des Roboters in dem Raum bezieht.

2. Das Verfahren gemäß Anspruch 1, wobei das Bestimmen (S602) von Zielrotationsinformationen des Roboters basierend auf den relativen Winkelinformationen folgende Schritte aufweist:
Bestimmen der relativen Winkelinformationen als die Zielrotationsinformationen des Roboters ansprechend darauf, dass die relativen Winkelinformationen größer als ein voreingestellter Winkelschwellenwert sind; und
Bestimmen, dass die Zielrotationsinformationen des Roboters voreingestellte Rotationsinformationen sind, ansprechend darauf, dass die relativen Winkelinformationen kleiner als oder gleich wie der voreingestellte Winkelschwellenwert sind.

3. Das Verfahren gemäß Anspruch 1 oder 2, wobei das Steuern (S101) des Roboters, so dass derselbe einem Zielobjekt folgt, folgende Schritte aufweist:
Erfassen (S701) eines Echtzeitbildes des Zielobjekts;
Erfassen (S702) einer Bewegungsbahn des Zielobjekts basierend auf dem Echtzeitbild; und
Steuern (S703) des Roboters, so dass derselbe dem Zielobjekt gemäß der Bewegungsbahn folgt.

4. Das Verfahren gemäß Anspruch 3, wobei das Steuern (S703) des Roboters, so dass derselbe dem Zielobjekt gemäß der Bewegungsbahn folgt, folgende Schritte aufweist:
Erfassen eines voreingestellten relativen Abstands zwischen dem Zielobjekt und dem Roboter in einem Szenario des Folgens des Zielobjekts von hinten;
Erfassen einer ersten Echtzeitgeschwindigkeit des Zielobjekts und Erfassen einer zweiten Echtzeitgeschwindigkeit des Roboters gemäß der ersten Echtzeitgeschwindigkeit und dem voreingestellten relativen Abstand; und
Steuern des Roboters, so dass derselbe dem Zielobjekt entlang einer tangentialen Richtung der Bewegungsbahn mit der zweiten Echtzeitgeschwindigkeit folgt.

5. Das Verfahren gemäß Anspruch 1 oder 2, wobei das Steuern (S101) des Roboters, so dass derselbe einem Zielobjekt folgt, folgende Schritte aufweist:
Erfassen einer voreingestellten relativen Stellungsbeziehung zwischen dem Zielobjekt und dem Roboter in einem Szenario des Folgens des Zielobjekts von der Seite; und
Steuern des Roboters, so dass derselbe dem Zielobjekt gemäß der voreingestellten relativen Stellungsbeziehung folgt, wobei eine erste Echtzeitbewegungsrichtung des Roboters und eine zweite Echtzeitbewegungsrichtung des Zielobjekts gleich gehalten werden.

6. Eine Folgesteuervorrichtung für einen Roboter, wobei die Folgesteuervorrichtung folgende Merkmale aufweist:
ein Steuermodul (801), das dazu konfiguriert ist, den Roboter zu steuern, so dass derselbe einem Zielobjekt folgt;
ein Erfassungsmodul (802), das dazu konfiguriert ist, bei einem Prozess des Folgens des Zielobjekts eine relative Stellungsbeziehung zwischen dem Zielobjekt und dem Roboter zu erfassen; und
ein Einstellmodul (803), das dazu konfiguriert ist, einen Sichtfeldbereich des Roboters gemäß der relativen Stellungsbeziehung und den Sichtfeldparameterinformationen des Roboters einzustellen, wobei sich das Zielobjekt in dem eingestellten Sichtfeldbereich befindet,
wobei das Einstellmodul (803) ferner konfiguriert ist zum:
Bestimmen von relativen Winkelinformationen des Zielobjekts und einer aktuellen Sichtfeldmittellinie des Roboters gemäß der relativen Stellungsbeziehung und den Sichtfeldparameterinformationen;
Bestimmen von Zielrotationsinformationen des Roboters basierend auf den relativen Winkelinformationen; und
Einstellen des Sichtfeldbereichs des Roboters basierend auf den Zielrotationsinformationen,
wobei die relative Stellungsbeziehung eine erste Stellung des Zielobjekts und eine zweite Stellung des Roboters aufweist, und das Einstellmodul (803) ferner konfiguriert ist zum:
Erfassen der aktuellen Sichtfeldmittellinie des Roboters gemäß der zweiten Stellung und den Sichtfeldparameterinformationen;
Erfassen einer Verbindungslinie zwischen dem Zielobjekt und dem Roboter gemäß der ersten Stellung und der zweiten Stellung; und
Bestimmen der relativen Winkelinformationen gemäß der aktuellen Sichtfeldmittellinie und der Verbindungslinie, wobei eine Größe und eine Richtung eines Winkels, der durch die aktuelle Sichtfeldmittellinie und die Verbindungslinie gebildet wird, erfasst werden, und die Größe und die Richtung des Winkels als die relativen Winkelinformationen genommen werden,
wobei eine Stellung eine Position und eine Lage des Zielobjekts oder des Roboters in einem spezifizierten Koordinatensystem beschreibt, die Position sich auf eine Stelle des Zielobjekts oder des Roboters in einem Raum bezieht, und die Lage sich auf eine Ausrichtung des Zielobjekts oder des Roboters in dem Raum bezieht.

7. Die Vorrichtung gemäß Anspruch 6, wobei das Einstellmodul (803) ferner konfiguriert ist zum:
Bestimmen der relativen Winkelinformationen als die Zielrotationsinformationen des Roboters ansprechend darauf, dass die relativen Winkelinformationen größer als ein voreingestellter Winkelschwellenwert sind; und
Bestimmen, dass die Zielrotationsinformationen des Roboters voreingestellte Rotationsinformationen sind, ansprechend darauf, dass die relativen Winkelinformationen kleiner als oder gleich wie der voreingestellte Winkelschwellenwert sind.

8. Die Vorrichtung gemäß Anspruch 6 oder 7, wobei das Steuermodul (801) ferner konfiguriert ist zum:
Erfassen eines Echtzeitbildes des Zielobjekts;
Erfassen einer Bewegungsbahn des Zielobjekts basierend auf dem Echtzeitbild; und
Steuern des Roboters, so dass derselbe dem Zielobjekt gemäß der Bewegungsbahn folgt.

9. Die Vorrichtung gemäß Anspruch 8, wobei das Steuermodul (801) ferner konfiguriert ist zum:
Erfassen eines voreingestellten relativen Abstands zwischen dem Zielobjekt und dem Roboter in einem Szenario des Folgens des Zielobjekts von hinten;
Erfassen einer ersten Echtzeitgeschwindigkeit des Zielobjekts und Erfassen einer zweiten Echtzeitgeschwindigkeit des Roboters gemäß der ersten Echtzeitgeschwindigkeit und dem voreingestellten relativen Abstand; und
Steuern des Roboters, so dass derselbe dem Zielobjekt entlang einer tangentialen Richtung der Bewegungsbahn mit der zweiten Echtzeitgeschwindigkeit folgt.

10. Die Vorrichtung gemäß Anspruch 6 oder 7, wobei das Steuermodul (801) ferner konfiguriert ist zum:
Erfassen einer voreingestellten relativen Stellungsbeziehung zwischen dem Zielobjekt und dem Roboter in einem Szenario des Folgens des Zielobjekts von der Seite; und
Steuern des Roboters, so dass derselbe dem Zielobjekt gemäß der voreingestellten relativen Stellungsbeziehung folgt, wobei eine erste Echtzeitbewegungsrichtung des Roboters und eine zweite Echtzeitbewegungsrichtung des Zielobjekts gleich gehalten werden.

11. Ein nicht flüchtiges computerlesbares Speichermedium, auf dem Computeranweisungen gespeichert sind, wobei die Computeranweisungen dazu konfiguriert sind, einen Computer zu veranlassen, ein Folgesteuerverfahren für einen Roboter gemäß einem der Ansprüche 1 bis 5 durchzuführen.

## Revendications

1. Procédé de commande de suivi pour un robot, comprenant le fait de :
commander (S101) le robot pour qu'il suive un objet cible ;
dans un processus de suivi de l'objet cible, acquérir (S102) une relation de pose relative entre l'objet cible et le robot ; et
ajuster (S103) une plage de champ visuel du robot selon la relation de pose relative et des informations de paramètres de champ visuel du robot, dans lequel l'objet cible se trouve dans la plage de champ visuel ajustée,
dans lequel l'ajustement (S103) d'une plage de champ visuel du robot selon la relation de pose relative et des informations de paramètres de champ visuel du robot comprend le fait de :
déterminer (S601) des informations d'angle relatif de l'objet cible et d'une ligne centrale de champ visuel actuel du robot, selon la relation de pose relative et les informations de paramètres de champ visuel ;
déterminer (S602) des informations de rotation cible du robot sur la base des informations d'angle relatif ; et
ajuster (S603) la plage de champ visuel du robot sur la base des informations de rotation cible,
dans lequel
la relation de pose relative comprend une première pose de l'objet cible et une deuxième pose du robot, et la détermination (S601) d'informations d'angle relatif entre l'objet cible et une ligne centrale de champ visuel actuel du robot, selon la relation de pose relative et les informations de paramètres de champ visuel comprend le fait de :
acquérir (S705) la ligne centrale de champ visuel actuel du robot selon la deuxième pose et les informations de paramètres de champ visuel ;
acquérir (S706) une ligne de connexion entre l'objet cible et le robot selon la première pose et la deuxième pose ; et
déterminer (S707) les informations d'angle relatif selon la ligne centrale de champ visuel actuel et la ligne de connexion, dans lequel une amplitude et une direction d'un angle formé par la ligne centrale de champ visuel actuel et la ligne de connexion sont acquises, et l'amplitude et la direction de l'angle sont prises en tant qu'informations d'angle relatif,
dans lequel une pose décrit une position et une posture de l'objet cible ou du robot dans un système de coordonnées spécifié, la position se rapporte à un emplacement de l'objet cible ou du robot dans un espace, et la posture se rapporte à une orientation de l'objet cible ou du robot dans l'espace.

2. Procédé selon la revendication 1, dans lequel la détermination (S602) d'informations de rotation cible du robot sur la base des informations d'angle relatif comprend :
déterminer les informations d'angle relatif en tant qu'informations de rotation de cible du robot en réponse au fait que les informations d'angle relatif sont supérieures à un seuil d'angle prédéfini ; et
déterminer que les informations de rotation cible du robot sont des informations de rotation prédéfinies, en réponse au fait que les informations d'angle relatif sont inférieures ou égales au seuil d'angle prédéfini.

3. Procédé selon la revendication 1 ou 2, dans lequel la commande (S101) du robot pour qu'il suive un objet cible comprend le fait de :
acquérir (S701) une image en temps réel de l'objet cible ;
acquérir (S702) une trajectoire de mouvement de l'objet cible sur la base de l'image en temps réel ; et
commander (S703) le robot pour qu'il suive l'objet cible selon la trajectoire de mouvement.

4. Procédé selon la revendication 3, dans lequel la commande (S703) du robot pour qu'il suive l'objet cible selon la trajectoire de mouvement comprend le fait de :
acquérir une distance relative prédéfinie entre l'objet cible et le robot dans un scénario de suivi de l'objet cible par derrière ;
acquérir une première vitesse en temps réel de l'objet cible, et acquérir une deuxième vitesse en temps réel du robot selon la première vitesse en temps réel et la distance relative prédéfinie ; et
commander le robot pour qu'il suive l'objet cible le long d'une direction tangentielle de la trajectoire de mouvement, à la deuxième vitesse en temps réel.

5. Procédé selon la revendication 1 ou 2, dans lequel la commande (S101) du robot pour qu'il suive un objet cible comprend le fait de :
acquérir une relation de pose relative prédéfinie entre l'objet cible et le robot dans un scénario de suivi de l'objet cible par le côté ; et
commander le robot pour qu'il suive l'objet cible selon la relation de pose relative prédéfinie, une première direction de mouvement en temps réel du robot et une deuxième direction de mouvement en temps réel de l'objet cible étant maintenues identiques.

6. Appareil de commande de suivi pour un robot, l'appareil de commande de suivi comprenant :
un module de commande (801) configuré pour commander le robot pour qu'il suive un objet cible ;
un module d'acquisition (802) configuré pour, dans un processus de suivi de l'objet cible, acquérir une relation de pose relative entre l'objet cible et le robot ; et
un module d'ajustement (803) configuré pour ajuster une plage de champ visuel du robot selon la relation de pose relative et des informations de paramètres de champ visuel du robot, dans lequel l'objet cible se trouve dans la plage de champ visuel ajustée,
dans lequel le module d'ajustement (803) est en outre configuré pour :
déterminer des informations d'angle relatif entre l'objet cible et une ligne centrale de champ visuel actuel du robot, selon la relation de pose relative et des informations de paramètres de champ visuel ;
déterminer des informations de rotation cible du robot sur la base des informations d'angle relatif ; et
ajuster la plage de champ visuel du robot sur la base des informations de rotation cible,
dans lequel
la relation de pose relative comprend une première pose de l'objet cible et une deuxième pose du robot, et le module d'ajustement (803) est en outre configuré pour :
acquérir la ligne centrale de champ visuel actuel du robot selon la deuxième pose et les informations de paramètres de champ visuel ;
acquérir une ligne de connexion entre l'objet cible et le robot selon la première pose et de la deuxième pose ; et
déterminer les informations d'angle relatif selon la ligne centrale de champ visuel actuel et la ligne de connexion, dans lequel une amplitude et une direction d'un angle formé par la ligne centrale de champ visuel actuel et la ligne de connexion sont acquis, et l'amplitude et la direction de l'angle sont prises en tant qu'informations d'angle relatif,
dans lequel une pose décrit une position et une posture de l'objet cible ou du robot dans un système de coordonnées spécifié, la position se rapporte à un emplacement de l'objet cible ou du robot dans un espace, et la posture se rapporte à une orientation de l'objet cible ou du robot dans l'espace.

7. Appareil selon la revendication 6, dans lequel le module d'ajustement (803) est en outre configuré pour :
déterminer les informations d'angle relatif en tant qu'informations de rotation de cible du robot en réponse au fait que les informations d'angle relatif sont supérieures à un seuil d'angle prédéfini ; et
déterminer que les informations de rotation cible du robot sont des informations de rotation prédéfinies, en réponse au fait que les informations d'angle relatif sont inférieures ou égales au seuil d'angle prédéfini.

8. Appareil selon la revendication 6 ou 7, dans lequel le module de commande (801) est en outre configuré pour :
acquérir une image en temps réel de l'objet cible ;
acquérir une trajectoire de mouvement de l'objet cible sur la base de l'image en temps réel ; et
commander le robot pour qu'il suive l'objet cible selon la trajectoire de mouvement.

9. Appareil selon la revendication 8, dans lequel le module de commande (801) est en outre configuré pour :
déterminer une distance relative prédéfinie entre l'objet cible et le robot dans un scénario de suivi de l'objet cible par derrière ;
acquérir une première vitesse en temps réel de l'objet cible, et acquérir une deuxième vitesse en temps réel du robot selon la première vitesse en temps réel et la distance relative prédéfinie ; et
commander le robot pour qu'il suive l'objet cible le long d'une direction tangentielle de la trajectoire de mouvement, à la deuxième vitesse en temps réel.

10. Appareil selon la revendication 6 ou 7, dans lequel le module de commande (801) est en outre configuré pour :
acquérir une relation de pose relative prédéfinie entre l'objet cible et le robot dans un scénario de suivi de l'objet cible par le côté ; et
commander le robot pour qu'il suive l'objet cible selon la relation de pose relative prédéfinie, une première direction de mouvement en temps réel du robot et une deuxième direction de mouvement en temps réel de l'objet cible étant maintenues identiques.

11. Support de stockage non transitoire lisible par ordinateur, sur lequel sont stockées des instructions informatiques, dans lequel les instructions informatiques sont configurées pour amener un ordinateur à mettre en œuvre un procédé de commande de suivi pour un robot selon l'une quelconque des revendications 1 à 5.
